Europäisches Patentamt

European Patent Office

Office européen des brevets

(11) Publication number: **0 520 655 A2**

## EUROPEAN PATENT APPLICATION

(21) Application number: **92305405.0**

(51) Int. Cl.⁵: **G06K 11/08**

(22) Date of filing: **12.06.92**

(30) Priority: **28.06.91 US 723103**

(43) Date of publication of application:
**30.12.92 Bulletin 92/53**

(84) Designated Contracting States:
**DE FR GB**

(71) Applicant: **NCR INTERNATIONAL INC.**
**1700 South Patterson Boulevard**
**Dayton, Ohio 45479(US)**

(72) Inventor: **Anderson, Richard E.**
**5585 Wylmoor Drive**
**Norcross, Georgia 30093(US)**

(74) Representative: **Robinson, Robert George**
**International Patent Department NCR Limited**
**915 High Road North Finchley**
**London N12 8OJ(GB)**

(54) **Item selection method and apparatus.**

(57) In an arrangement for operating a touch screen panel (44,46) for processing an order in a fast food operation, for example, an infrared detection device (48) is superimposed on the touch screen panel (44,46), such that the movement of a selecting member such as a customer's finger through the infrared detection device (48) results in the highlighting of a group (e.g. 26) of food items displayed on the touch screen panel (44,46) allowing an order to be generated by touching the touch screen panel adjacent the selected item in the highlighted group (26).

**FIG. 2**

This invention relates to a method and apparatus for selecting from displayed data items.

The invention has a particular application to the ordering of food items in a fast food establishment, but is not restricted to such application.

In order to increase the speed of processing orders in fast food establishments, self-service touch screen panels have been introduced in which the panel will display areas of data representing food items and condiments and in which the customer will make a selection by touching the appropriate area displaying the item requested. It has been found that the customer has difficulty in detecting the location of the display area pertaining to the particular food group desired, such as condiments, and consequently the time taken for the customer to select his order is unduly prolonged.

The document US-A-4 812 833 discloses a touch panel input device which includes a sensor for detecting that an operator's finger has approached towards a touch input key, for the purpose of preventing the operator from performing an erroneous key operation. The sensor includes a plurality of optical element pairs each consisting of a light emitting diode and a photodetector. Light beams generated by the optical element pairs are arranged in the form of a matrix to form a detection plane. When the operator's finger traverses this detection plane, a cursor is displayed on the display screen at a position corresponding to the position of the finger in the detection plane. Thus, a touch panel key about to be operated by the operator's finger is indicated by the cursor, reducing the possibility of erroneous key operation.

It is an object of the present invention to provide a method and apparatus for selecting from displayed data items, which enable a rapid selection to be achieved.

Therefore, according to one aspect of the present invention, there is provided a method for selecting from displayed data items, characterized by the steps of: displaying on a display screen a plurality of groups of data items capable of being selected; moving a selecting member to a position adjacent a selected one of said groups, thereby causing the selected group to be highlighted on said display screen; and utilizing said selecting member to select on said display screen a selected item from the highlighted group.

According to another aspect of the present invention, there is provided apparatus for selecting a displayed data item, including display means for displaying data items, and control means, characterized in that said control means is adapted to cause said display means to display a plurality of groups of data items capable of being selected and is further adapted, in response to movement of a selecting member to a position adjacent a selected one of said groups, to cause the selected group to be highlighted on said display means and, in response to an operative movement of said selecting member at a displayed selected item within the highlighted group, to effect selection thereof.

It will be appreciated that a method and apparatus according to the invention have the advantage that a high operational speed of selection by an operator is achievable, since groups of items from which a selection is to be made can be easily identified.

One embodiment of the present invention will now be described by way of example, with reference to the accompanying drawings in which:-

Fig. 1 is a block diagram of a control system for a touch panel display embodying the present invention.

Fig. 2 is a schematic representation of a display appearing on the touch panel display of the present invention;

Fig. 3 is a schematic representation of a side view of the touch panel display showing the location of the infrared detection device and the transparent touch panel; and

Fig. 4 is a schematic representation of the infrared detection device showing the paths of the infrared light beams.

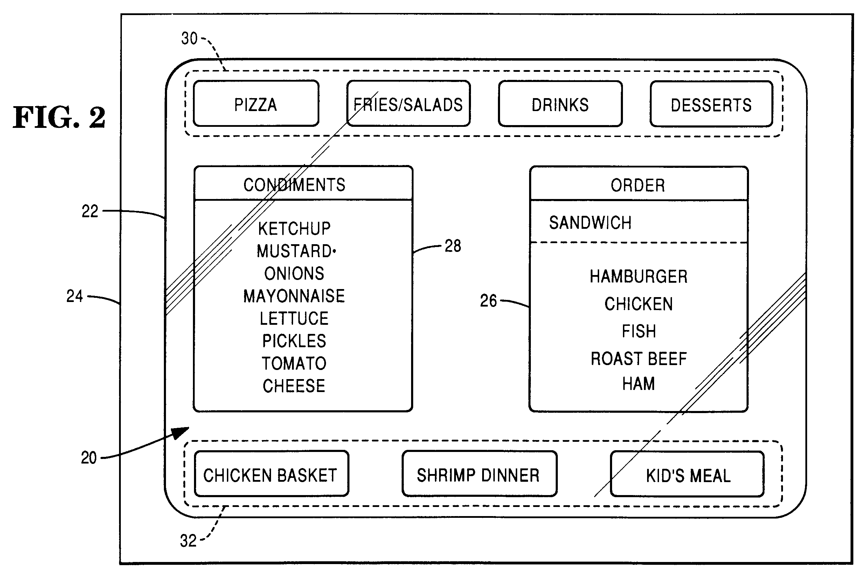

Referring now to Fig. 2, there is shown a schematic representation of a display generally indicated by the numeral 20 which appears on the screen 22 of a data terminal device 24 which is employed as part of the ordering service in a fast food restaurant. The display 20 includes the display 26 which lists the various types of sandwiches that are available for order, display 28 which lists the various condiments that are available and the displays 30, 32 each listing other items which may be ordered.

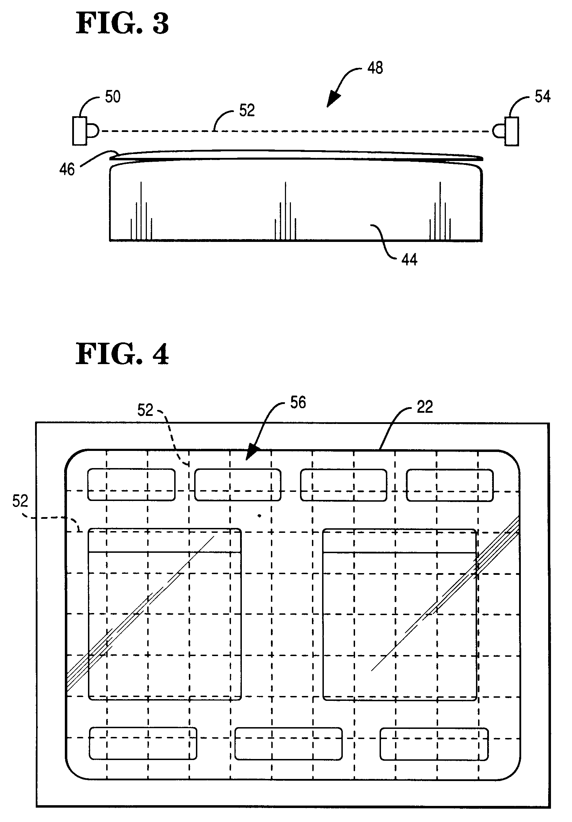

Referring now to Fig. 3, there is shown a schematic representation of the touch screen construction which includes a CRT device 44 on whose face is positioned a resistive or capacitive type touch panel or screen 46 which, as is well known in the art, will generate electrical signals representing the x and y coordinates of a location on the panel that is touched by a object such as the finger of an operator. The touch panel or screen 46 is transparent so that the display generated by the CRT device 44 is visible therethrough. Mounted adjacent to and above the overlay touch panel 46 is an infrared detection device generally indicated by the numeral 48 which comprises a plurality of equally spaced infrared light sources 50 for emitting an infrared light beam 52 across the face of the touch panel 46 to an associated infrared light detector 54 forming a grid type screen generally indicated by the numeral 56 (Fig. 4) which is normally invisible to the customer.

Movement of the finger of a customer adjacent the face of the touch panel 46 will intercept the infrared light beams 52 enabling the light detectors 54 to generate signals representing the location of the finger with respect to the grid 56.

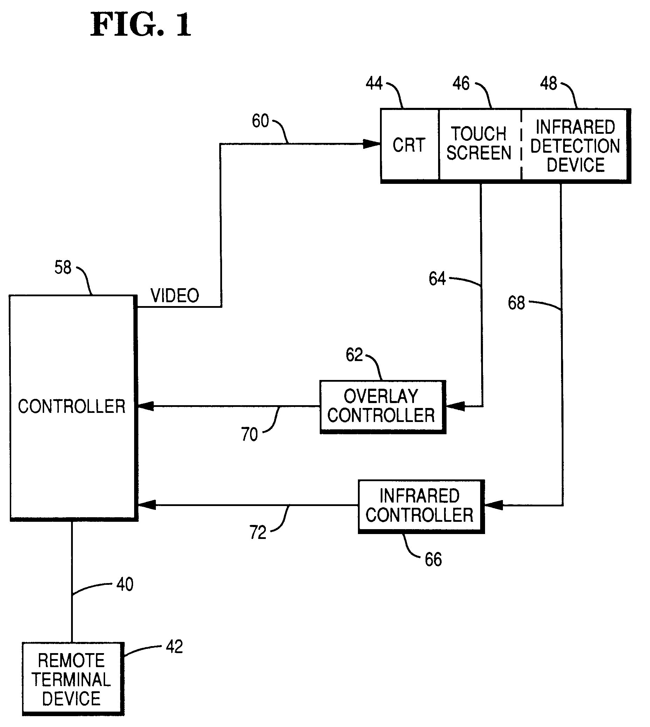

Referring now to Fig. 1, there is shown a block diagram of the control system of the present invention for processing the signals generated by the operation of the touch panel 46 and the detection device 48 including the controlling of the light intensity of designated areas of the Cathode Ray Tube (CRT) device 44. Included in the system is a controller 58 which outputs the signal VIDEO over line 60 to the CRT device 44 for controlling the light intensity of the CRT device in a manner that is well known in the art. Coupled over line 70 to the controller 58 is a overlay controller 62 which is coupled over line 64 to the overlay touch panel or screen 46 (Fig. 3) for receiving signals representing the x-y coordinates of the location on the touch panel touched by the finger of the customer. An infrared controller 66 is coupled to the controller 58 over line 72 and is coupled over line 68 to the infrared detection device 48 (Fig. 3) for receiving signals representing the location of the finger as it moves across the device. In response to the signals received from the touch panel 46 and the device 48, the controllers 62 and 66 will generate control signals over lines 70 and 72 respectively to the controller 58. In response to receiving the signals from the infrared controller 66, the controller 58 will generate the signal VIDEO over line 60 to the CRT device 44 for selectively changing the background light intensity of a display area, such as the area 26, for example, adjacent the location of the customer's finger. The signals from the overlay controller 62 and transmitted over line 70 to the controller 58 result in the controller 58 transmitting data signals over line 40 to a remote data terminal device 42 which either prints on a record member the items ordered or displays such items.

In the operation of the system, the customer will first move a finger (or other suitable selecting member) above the face of the touch panel 46 adjacent one of the display areas 26-32 inclusive (Fig. 2) resulting in the panel outputting signals representing the location of the finger with respect to the panel over line 68 (Fig. 1) to the controller 66. In response to receiving these signals, the controller 66 will output control signals over line 72 to the controller 58 enabling the controller 58 to generate and transmit the control signal VIDEO over line 60 to the CRT device 44 enabling the CRT device to highlight the designated display area by changing the background intensity of such designated area, for example. The customer will then select a particular item in the highlighted area for purchase by pressing a finger against the face of the touch panel 46 (Fig. 3) adjacent the location of the indicia representing the particular item. In response to the touching of the touch panel 46, electrical signals representing the x and y coordinates of such location will be transmitted over line 64 (Fig. 1) to the overlay controller 62 which generates signals for transmission over line 70 to the controller 58. The controller 58 in response to receiving the signals over line 70 will generate control signals for transmission over line 40 (Fig. 1) to the remote terminal device 42 which will either display the order to an employee of the restaurant or print out the order on a receipt member which can be issued to the operator for use in fulfilling the customer's order. It will be seen from this arrangement that by controlling the light intensity of portions of the screen of the CRT member, positive feedback will be given to the customer enabling the customer to correctly order the items that are desired.

## Claims

1. A method for selecting from displayed data items, characterized by the steps of: displaying on a display screen (22) a plurality of groups (26,28) of data items capable of being selected; moving a selecting member to a position adjacent a selected one (e.g. 26) of said groups (26,28), thereby causing the selected group (26) to be highlighted on said display screen (22); and utilizing said selecting member to select on said display screen (22) a selected item from the highlighted group (26).

2. A method according to claim 1, wherein said display screen (22) has a touch screen (46) and a detection means (48) associated therewith, characterized in that cooperation between said selecting member and said detection means (48) effects the highlighting of said selected group (26), and cooperation between said selecting member and said touch screen (46) effects the selection of said selected item.

3. A method according to claim 1, or claim 2, characterized in that said selected group (26) is highlighted by changing the background light intensity thereof.

4. A method according to any one of the preceding claims, characterized in that said selecting member is a human finger.

5. Apparatus for selecting a displayed data item, including display means (22) for displaying data items, and control means (58,62,66), characterized in that said control means (58,62,66) is adapted to cause said display means (22) to display a plurality of groups (26,28) of data items capable of being selected and is further adapted, in response to movement of a selecting member to a position adjacent a selected one (e.g. 26) of said groups (26,38), to cause the selected group (26) to be highlighted on said display means (20) and, in response to an operative movement of said selecting member at a displayed selected item within the highlighted group (26), to effect selection thereof.

6.  Apparatus according to claim 5, characterized by: touch screen means (46) positioned adjacent to an in registry with said display means (22); detection means (48) positioned adjacent to and in registry with said touch screen means (46); and in that said control means includes a first controller (58) coupled to said display means (22) for controlling said display means (22) and also coupled to a utilizing device (42) for providing information thereto; a second controller (66) coupled to said detection means (48) and to said first controller (58) to cause information from said detection means (48) to control said first controller (58) to cause highlighting of one of the displayed groups on said display means (22); and a third controller (62) coupled to said touch screen means (46) and to said first controller (58) to cause information from said touch screen means (46) related to the selection of an item in the highlighted group to be transmitted by said first controller (58) to said utilizing device (42).

7.  Apparatus according to claim 6, characterized in that said detection means (48) includes a plurality of sources of radiant energy (50) mounted adjacent to and above an edge of said touch screen means (46) and adapted to project radiant energy in a direction parallel to the face of said touch screen means (46) and detector means (54) mounted opposite said plurality of sources of radiant energy (50) and adapted to detect the presence or absence of said radiant energy.

# FIG. 1

**FIG. 2**

EP 0 520 655 A2

# FIG. 3

# FIG. 4